# EUROPÄISCHE PATENTSCHRIFT

(11) **EP 1 816 382 B1**
(45) Veröffentlichungstag und Bekanntmachung des Hinweises auf die Patenterteilung: **16.09.2009**
(21) Anmeldenummer: 06002043.5
(22) Anmeldetag: 01.02.2006
(51) Int. Cl.: F16L 5/10

(54) **Wanddurchführung**
Wall feedthrough
Traversée de murs

(43) Veröffentlichungstag der Anmeldung: 08.08.2007
(73) Patentinhaber: Pharmaserv GmbH & Co. KG, 35041 Marburg (DE)
(72) Erfinder: Grebing, Helmut, 35037 Marburg (DE)
(74) Vertreter: KEIL & SCHAAFHAUSEN Patentanwälte

(56) Entgegenhaltungen:
- DE-C- 629 338
- US-A- 5 973 271

## Beschreibung

Die Erfindung betrifft eine Durchführung durch eine Wand, Decke oder dergl. mit einem in eine Öffnung einer Wand, Decke oder dergl. einzusetzenden Körper, der eine durchgehende Bohrung zur Aufnahme einer Rohrleitung, eines Kabels oder dergl. Strangmaterial aufweist, sowie ein Verfahren zum Befestigen einer derartigen Durchführung in der Öffnung einer Wand, Decke oder dergl. und ein Verfahren zum Lösen einer derartigen Durchführung aus der Öffnung der Wand, Decke oder dergl.

Derartige Durchführungen durch Wände, Decken und dergl. sind beispielsweise für Rohrleitungen, Kabeln oder dergl. Strangmaterial, die in Reinräume, klinische Räume oder medizinische Geräte eingeführt werden, von besonderem Interesse. Die vorgeschlagene Durchführung kann jedoch auch in anderen Anwendungsbereichen, wie der Rohrleitungs- oder Elektroinstallation von Büro-oder Wohngebäuden oder in Kraftfahrzeugen zur Aufnahme von Rohrleitungen, Kabeln oder dergl. Strangmaterial dienen.

Bekannte Durchführungen werden häufig mittels einer Schraubverbindung an einer Wand, einer Decke oder dergl. befestigt. Der Nachteil derartiger Durchführung besteht darin, dass die Wand, die Decke oder dergl. zum Befestigen der Durchführung beidseitig zugänglich sein muss.

Eine andere, bekannte Möglichkeit, Durchführungen an einer Wand, einer Decke oder dergl. zu befestigen, besteht darin, die Durchführung auf die Oberfläche der Wand, der Decke oder dergl. aufzukleben. Nachteilig hierbei ist, dass die Durchführung nur schwer und unter Beschädigung der Oberfläche entfernt werden kann.

Aus der US 5,973,271 ist eine Wanddurchführung bekannt, dessen Körper aus einem ersten Abschnitt und einem zweiten Abschnitt besteht. Der erste Abschnitt weist eine an den die Öffnung umgebenden Wandbereich anzulegende Stirnfläche auf. Der zweite Abschnitt wird zur Montage des Körpers durch die Öffnung in der Wand hindurch geführt. Ein Federelement legt den Körper an dem die Öffnung umgebenden Wandbereich fest. Hierzu bringt das Federelement eine Druckkraft auf die Fläche des ersten Abschnitts auf, die der Stimfläche gegenüber liegt. Um die Kraft dauerhaft auf den Körper der Wanddurchführung aufzubringen, sind an der Wand Klammem vorgesehen, hinter die das Federelement geklemmt wird. Für diese Möglichkeit der Befestigung einer Wanddurchführung an der Wand sind somit zusätzliche Teile vorzusehen, welche die Befestigung der Wanddurchführung schwierig, zeitraubend und kostenaufwändig macht.

Die Aufgabe der vorliegenden Erfindung besteht darin, eine Durchführung für eine Wand, Decke oder dergl. zu schaffen, die einfach aufgebaut ist und sich leicht und schnell an der Öffnung in der Wand, Decke oder dergl. befestigen und problemlos von dieser wieder lösen lässt. Ferner ist Aufgabe der vorliegenden Erfindung, einfache Verfahren zum Befestigen der Durchführung in der Öffnung der Wand, Decke oder dergl. bzw. zum Lösen der Durchführung aus der Öffnung der Wand, Decke oder dergl. anzugeben.

Erfindungsgemäß wird diese Aufgabe durch eine Durchführung gemäß Patentanspruch 1 gelöst. Die erfindungsgemäße Durchführung weist einen aus einem in eine Öffnung einer Wand, Decke oder dergl. einzusetzenden Körper bestehend mindestens aus einem ersten Abschnitt mit einer an den die Öffnung umgebenden Bereich der Decke, Wand oder dergl. anzulegenden Stirnfläche und einem durch die Öffnung hindurchzuführenden zweiten Abschnitt, wobei der Körper mit einer durchgehenden Bohrung zur Aufnahme einer Rohrleitung, eines Kabels oder dergl. Strangmaterial versehen ist, sowie mit einem Federelement zur Positionierung des Körpers an der Wand, Decke oder dergl. auf. Das Federelement ist erfindungsgemäß als kegelige, schraubenlinienförmige Druckfeder ausgebildet, deren Kopf an dem dem ersten Abschnitt abgewandten Ende des zweiten Abschnitts wenigstens mit hohern Reibschluss abgestützt oder auf andere Weise festgelegt ist und dort einen Außendurchmesser aufweist, der kleiner als der Durchmesser der Öffnung ist, und deren Fuß sich bei Beginn der Montage an der Stimfläche des ersten Abschnitts abstützen kann, wobei der Innendurchmesser der Druckfeder im Bereich des Fußes größer als der Durchmesser der Öffnung ist.

Im Folgenden wird nur der Einfachheit halber auf die Anwendung der erfindungsgemäßen Durchführung für eine Wand Bezug genommen. Ausdrücklich sollen andere Anwendungen der erfindungsgemäßen Durchführung, bspw. für eine Decke, hierdurch ebenfalls umfasst werden.

Die erfindungsgemäße Durchführung, die lediglich aus einem Körper und einer Druckfeder zu bestehen braucht, lässt sich mit Hilfe der Druckfeder aufgrund deren besonderen Gestalt leicht von einer Seite in die Öffnung einer Wand einschrauben. Die Montage der Durchführung an der Wand erfordert somit lediglich die Zugänglichkeit der Wand von einer Seite. Nach dem Einschrauben ist die Durchführung an der Wand festgelegt und lässt sich bei Bedarf aber wieder von dieser lösen, ohne die Wand zu beschädigen. Zusätzliche Klemmen oder ähnliche Bauteile sind zum Befestigen der Durchführung an der Wand nicht notwendig. Der Körper der Durchführung ist ein einfach herzustellenden zum Beispiel als Drehteil ausgebildetes Bauteil einfacher geometrischer Gestalt und die kegelige, schraubenlinienförmige Druckfeder ist ein einfaches, im Handel standardmäßig erhältliches Bauteil, so dass die Durchführung kostengünstig herstellbar ist. Ein weiterer wichtiger Vorteil der erfindungsgemäßen Durchführung besteht darin, dass diese wahlweise für Öffnungen mit unterschiedlichen Durchmessern eingesetzt werden kann, solange der Innendurchmesser der Druckfeder im Bereich des Fußes größer als der Durchmesser der Öffnung ist.

Gemäß einer Weiterbildung der Erfindung kann die Bohrung des Körpers der Durchführung mindestens teilweise als Innenkonus ausgebildet sein, so dass die in dieser Bohrung anzuordnende Rohrleitung, Kabel oder dergl. Strangmaterial mit einem Gefälle in der Bohrung angeordnet werden kann, was häufig für Sterilrohrleitungen gefordert ist.

Zusätzlich oder alternativ dazu kann die Durchführung im Bereich des ersten Abschnitts in der durchgehenden Bohrung eine Ringnut aufweisen, in der ein Dichtring angeordnet werden kann. Diese Ausgestaltung ermöglicht die Abdichtung der Bohrung der Durchführung.

Besonders einfach lässt sich die Durchführung in der Öffnung der Wand befestigen und von dieser wieder lösen, wenn der z.B. rohrartig ausgebildete zweite Abschnitt einen sich zur Stirnfläche des ersten Abschnitts hin verjüngenden, äußeren konischen Bereich aufweist. Diese Ausgestaltung der Erfindung ermöglicht in dem Bereich des zweiten Abschnitts, der sich an den ersten Abschnitt anschließt, einen großen Spielraum bei Montage bzw. Demontage.

In einem weiteren, bevorzugten Ausführungsbeispiel ist die Stirnfläche, die an den die Öffnung umgebenden Wandbereich anzulegen ist, im Wesentlichen eben ausgebildet. Hierdurch wird ein möglichst großer Bereich der Stirnfläche, der sich an diesen Wandbereich anlegt, bereitgestellt und somit die Abdichtung der Öffnung bzw. die Sicherheit der Befestigung der Durchführung an der Wand verbessert.

Eine weitere Verbesserung der Dichtigkeit der Durchführung wird erreicht, wenn in der Stirnfläche des ersten Abschnitts eine Ringnut für einen darin anzuordnenden Dichtring vorgesehen wird. Hierbei ist es von Vorteil, wenn der Innendurchmesser der Ringnut größer als der Durchmesser der Öffnung in der Wand ist. Die Öffnung in der Wand wird auf diese Weise von dem in der Stirnfläche des ersten Abschnitts angeordneten Dichtring zuverlässig abgedichtet. Es sind aber auch andere Abdichtmöglichkeiten denkbar, welche keine zusätzliche Ringnut erfordern.

Als Bauteil, vorzugsweise als Drehteil, besonders einfach und kostengünstig kann der Körper der Durchführung hergestellt werden, wenn der erste und/oder der zweite Abschnitt als einfache geometrische Form, vorzugsweise im Wesentlichen zylindrisch ausgebildet sind/ist.

In einem weiteren, bevorzugten Ausführungsbeispiel ist der Kopf der Druckfeder an dem dem ersten Abschnitt abgewandten Ende des zweiten Abschnitts, vorzugsweise in einer dort vorgesehenen Ringnut festgelegt, so dass das Befestigen und das Lösen der Durchführung in der Öffnung der Wand bzw. von der Wand vereinfacht wird.

Die Reinigung von Wänden, die mit Durchführungen versehen sind, lässt sich erleichtern, wenn der z.B. flanschartig ausgebildete erste Abschnitt des Körpers der Durchführung an dem dem zweiten Abschnitt abgewandten Ende einen sich von der Stirnfläche des ersten Abschnitts weg verjüngenden konischen Bereich aufweist.

Für Anwendungen in Reinräumen oder der Medizintechnik kann der Körper der Durchführung vorzugsweise mindestens teilweise aus PVC, PVDF oder Edelstahl bestehen.

Eine gute Abstimmung der Feder mit dem Körper der Durchführung und eine besonders leichte Montage wird ermöglicht, wenn die Länge des zweiten Abschnitts mindestens das Doppelte der Wanddicke beträgt.

In einem weiteren bevorzugten Ausführungsbeispiel ist das freie Ende des Fu-βes der Druckfeder radial nach innen gebogen. Dies ermöglicht ein einfaches Lösen der Durchführung von der Wand durch Herausschrauben der Druckfeder,

Wenn der zweite Abschnitt des Körpers der Durchführung in dem Bereich, in welchem im befestigten Zustand die Wandöffnung angeordnet ist, einen gegenüber dem Durchmesser der Wandöffnung kleinen Durchmesser aufweist, dann lässt sich die Achse der Durchführung sehr einfach aus der Mitte der Öffnung verschieben. In diesem Fall ist es notwendig, dass die an der Wand im Bereich der Öffnung anzulegende Stirnfläche und der Fuß der Druckfeder (sowie ggf. der an der Stirnfläche angeordnete Dichtring) einen deutlich größeren Durchmesser verglichen mit dem Durchmesser der Öffnung aufweisen, wenn die Durchführung die Öffnung in jeder Lage abdichten soll, In diesem Fall beträgt der Durchmesser der Stirnfläche dₛ, der Innendurchmesser der Druckfeder d_{F1} im Bereich des Fußes mindestens über den Bereich etwa einer halben Windung und gegebenenfalls der Innendurchmesser der Ringnut in der Stirnfläche d_{NI} mindestens einen Wert, der sich aus dem doppelten Durchmesser der Öffnung d_{Ö} vermindert um den maximalen Durchmesser des zweiten Abschnitts d₂ an dem Ende, das an dem ersten Abschnitt angrenzt, über einen Bereich von der Länge der Wandstärke ergibt. Hierdurch ist gewährleistet, dass die Stirnfläche die Öffnung auch dann noch abdeckt, wenn die Achse der Durchführung aus der Mitte der Öffnung verschoben ist.

Die Erfindung wird unter dem Aspekt der Montage und Demontage ferner durch das in Patentanspruch 15 angegebene Verfahren zum Befestigen einer erfindungsgemäßen Durchführung sowie das in Patentanspruch 16 angegebene Verfahren zum Lösen einer solchen Durchführung gelöst.

Das erfindungsgemäße Verfahren zum Befestigen einer Durchführung in der Öffnung einer Wand beinhaltet die Schritte, dass zunächst das dem ersten Abschnitt abgewandte Ende des zweiten Abschnitts des Körpers mit dem Kopf der Druckfeder in die Öffnung der Wand eingeführt wird, bis ein Teil einer Windung der Druckfeder an dem die Öffnung umgebenden äußeren Wandbereich anliegt, und anschließend die Durchführung unter Drehen um ihre Längsachse weiter in die Öffnung entlang der Windung der Druckfeder eingeschraubt wird, bis der Fuß der Druckfeder durch die Öffnung hindurchgetreten ist und sich an einer Innenfläche der Wand abstützt sowie die Stimfläche des ersten Abschnitts des Körpers an der Außenfläche der Wand federvorgespannt anliegt.

Bei dem erfindungsgemäßen Verfahren zum Lösen einer Durchführung wird der Körper mittels der Druckfeder aus der Wandöffnung herausgeschraubt, wobei der Körper während des Schraubens aus der Öffnung der Wand herausgezogen wird.

Die erfindungsgemäßen Verfahren sind beide mittels einfacher Handgriffe durchführbar und können mit geringem Zeitaufwand einhändig durchgeführt werden. Die Verfahren benötigen jeweils nur den Zugang zu einer Seite der Wand.

Die Erfindung wird nachfolgend Anhand von Ausführungsbeispielen und der Figuren näher erläutert. Dabei bilden alle beschriebenen und/oder bildlich dargestellten Merkmale den Gegenstand der Erfindung, auch unabhängig von ihrer Zusammenfassung in den Ansprüchen oder deren Rückbeziehung.

Es zeigen:
- Fig. 1: eine Schrägansicht der erfindungsgemäßen Durchführung gemäß eines ersten Ausführungsbeispiels der vorliegenden Erfindung,
- Fig. 2: die Durchführung nach Fig. 1 mit einem durch die durchgehende Bohrung hindurch geführten Rohrabschnitt in Schrägansicht,
- Fig. 3: den schematischen Querschnitt des Körpers der Durchführung gemäß des ersten Ausführungsbeispiels der vorliegenden Erfindung,
- Fig. 4: eine Seitenansicht der erfindungsgemäßen Durchführung gemäß des ersten Ausführungsbeispiels, wenn diese in der Öffnung einer Wand befestigt ist,
- Fig. 5: eine Seitenansicht einer erfindungsgemäßen Durchführung gemäß eines weiteren Ausführungsbeispiels der vorliegenden Erfindung, wenn diese in der Öffnung der Wand befestigt ist und
- Fig. 6: eine Seitenansicht der Durchführung gemäß des ersten Ausführungsbeispiels der vorliegenden Erfindung angeordnet in der Öffnung einer Wand.

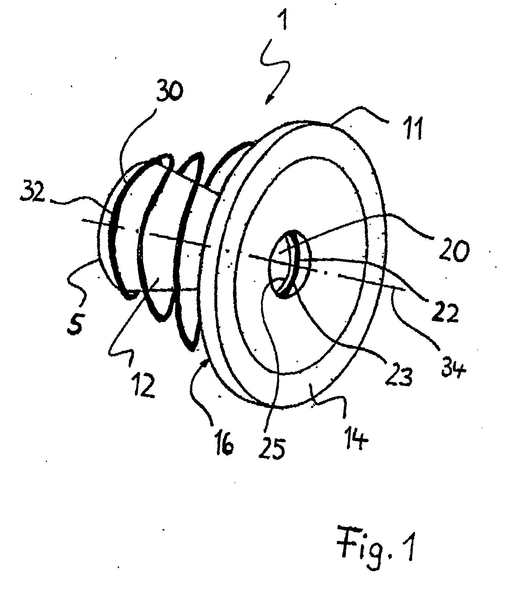

Die in Fig. 1 dargestellte Durchführung 1 weist einen Körper 5 mit einem flanschartigen ersten Abschnitt 11 und einem rohrartigen zweiten Abschnitt 12 auf. Der erste Abschnitt 11 ist im Wesentlichen zylinderscheibenförmig ausgebildet und weist an dem Ende, das dem zweiten Abschnitt 12 abgewandt liegt, einen Außenkonus 14 auf. An dem Ende des ersten Abschnitts 11, an dem sich der zweite Abschnitt 12 anschließt, bildet der erste Abschnitt 11 eine Stirnfläche 16 aus, die zur Anlage einer der Wand 40 in dem Bereich bestimmt ist, in welchem eine Öffnung 42 vorgesehen ist. Der zweite Abschnitt 12 ist im Wesentlichen zylinderförmig ausgebildet und weist einen Außenkonus auf, dessen Öffnung in eine von dem ersten Abschnitt 11 weg weisende Richtung zeigt. Demnach verjüngt sich der zweite Abschnitt 12 bei etwa gleich bleibender Wandstärke zur Stirnfläche 16 des ersten Abschnitts 11 hin. Der zweite Abschnitt 12 als aber auch zylindrisch ohne Außen- und/oder ohne Innenkonus gestaltet sein.

Der erste Abschnitt 11 und der zweite Abschnitt 12 weisen eine durchgehende Bohrung 20 auf, die zur Aufnahme einer Rohrleitung, eines Kabels oder dergleichen Strangmaterial dient. In dem in Fig. 1 dargestellten, bevorzugten Ausführungsbeispiel ist in der die durchgehende Bohrung 20 im Bereich des ersten Abschnitts 11 begrenzende Innenwandfläche eine Ringnut 22 vorgesehen, in der ein Dichtring 23 anordenbar ist. In Fig. 1 ist innerhalb der Bohrung 20 die Kante 25 erkennbar, an der der Innenkonus der Bohrung 20 im Bereich des zweiten Abschnitts 12 beginnt.

An dem Ende des zweiten Abschnitts 12, das dem ersten Abschnitt 11 abgewandt liegt, ist der Kopf einer kegeligen, schraubenlinienförmigen Druckfeder 30 angeordnet, die sich von dort in Richtung des ersten Abschnitts 11 erstreckt. Der Kegelstumpf erweitert und öffnet sich in Richtung des ersten Abschnitts 11, so dass der Bereich der Druckfeder 30 mit dem kleineren Durchmesser (Kopf) an dem Ende des zweiten Abschnitts 12, das dem ersten Abschnitt 11 gegenüber liegt, angeordnet ist, und der Bereich der Druckfeder 30 mit dem größeren Durchmesser (Fuß) an dem Ende des zweiten Abschnitts 12, das an den ersten Abschnitt 11 angrenzt. Da es sich bei dem Federelement 30 um eine Druckfeder handelt, stützt diese sich vor der Montage im Bereich des Fußes an der Stimfläche 16 des ersten Abschnitts ab und im Bereich des Kopfes an dem Ende des zweiten Abschnitts 12, das dem ersten Abschnitt 11 abgewandt liegt. Hierbei weist die Abstützung an dem Kopfende der Druckfeder 30 mindestens einen so hohen Reibschluss auf, dass die Druckfeder 30 bei Drehung des Körpers 5 mit diesem mitgedreht wird. Auch andere Festlegungsmöglichkeiten wie Kraftschluss und/oder Formschluss sind geeignet und in bestimmten Fällen sogar bevorzugt. In dem in Fig. 1 dargestellten Ausführungsbeispiel ist die Druckfeder 30 in einer Nut 32 an dem Ende des zweiten Abschnitts 12 festgelegt, das dem ersten Abschnitt 11 abgewandt liegt. In einem weiteren Ausführungsbeispiel kann die Druckfeder 30 aber auch lediglich beispielsweise an einer Stufe unter hinreichendem Federdruck abgestützt sein. Die Abstützung erfolgt hierbei an diesem Ende des zweiten Abschnitts entlang der Achse 34 der Durchführung in einer von der Stirnfläche 16 abgewandten Richtung. Der Durchmesser der Druckfeder 30 im Bereich des Kopfes ist, da diese bei der Montage der Durchführung durch die Öffnung 42 hindurch gesteckt werden soll, kleiner als der Durchmesser der Öffnung 42 in der Wand 40. Im Bereich des Fußes der Druckfeder 30 ist ihr Innendurchmesser größer als der Durchmesser der Öffnung 42 der Wand 40.

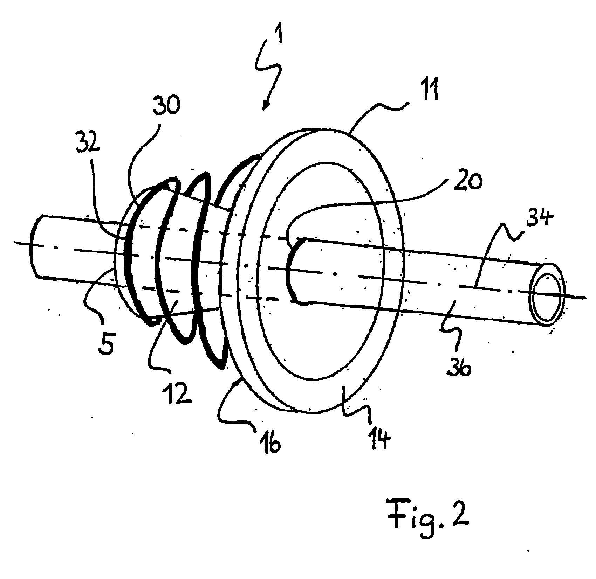

Fig. 2 zeigt eine zu Fig. 1 analoge Ansicht der Durchführung 1, wobei beispielsweise ein Rohrabschnitt 36 in der durchgehenden Bohrung 20 der Durchführung 1 angeordnet ist.

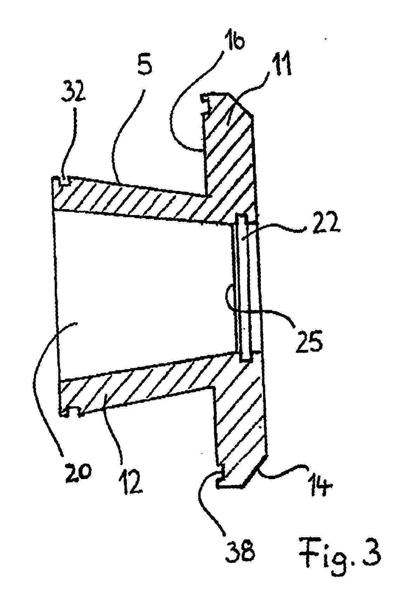

Fig. 3 zeigt den Körper 5 des ersten Ausführungsbeispiels der erfindungsgemäßen Durchführung 1 im Querschnitt. In dieser Ansicht ist die Innengestaltung des Körpers 5 besser erkennbar. Deutlich sichtbar ist der von Kante 25 ausgehende Konus der Bohrung 20. In diesem, in Fig. 3 dargestellten Ausführungsbeispiel öffnet sich der Konus in Richtung des Endes des zweiten Abschnitts 12, das dem ersten Abschnitt 11 abgewandt liegt. In einem weiteren Ausführungsbeispiel kann die Öffnung des Konus auch in die entgegen gesetzte Richtung zeigen. Der jeweilige Konus soll gewährleisten, dass das in der Bohrung angeordnete Strangmaterial in der Durchführung 1 mit einer Neigung zur Längsachse des Körpers 5, insbesondere mit einem Gefälle versehen werden kann.

Die Stimfläche 16 des ersten Abschnitts 11, die in diesem Ausführungsbeispiel im Wesentlichen eben ausgebildet ist, weist eine Ringnut 38 auf. In die Ringnut 38 kann ein Dichtring 48 eingelegt werden, der vorzugsweise einen größeren Innendurchmesser aufweist, als der Durchmesser der Öffnung 42, in welche die Durchführung 1 eingesetzt werden soll. Der Dichtring 48 liegt dann an der Außenfläche 44 der Wand 40 an und dichtet die Öffnung 42 ab, wobei zur Erzielung der Dichtigkeit ggf. außerdem der Dichtring 23 mit dem Rohrabschnitt 36 zusammenwirkt.

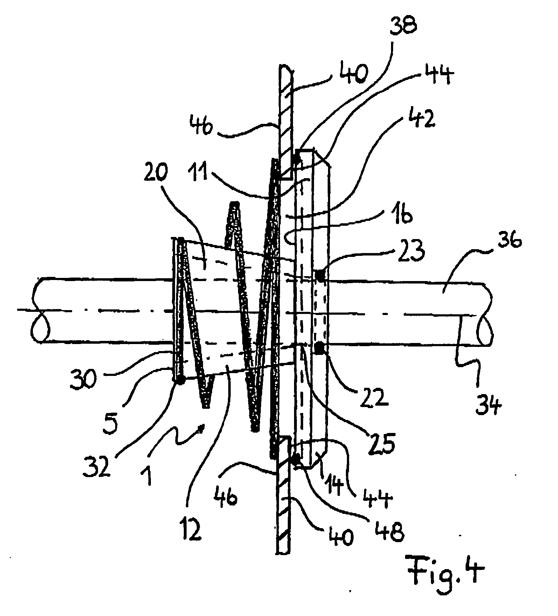

Fig. 4 zeigt die in den Fig. 1 bis 3 beschriebene Durchführung 1 in dem in der Öffnung 42 der Wand 40 montierten Zustand. Hierzu wurde die Durchführung 1 mit dem Ende des zweiten Abschnitts 12, das dem ersten Abschnitt 11 abgewandt liegt, zuerst in die Öffnung 42 der Wand 40 eingeführt. In einem bevorzugten Ausführungsbeispiel ist hierbei die Rohrleitung, das Kabel oder dergleichen Strangmaterial bereits in die durchgehenden Bohrung 20 der Durchführung 1 eingeschoben. Die Durchführung 1 wird dabei zunächst im Wesentlichen senkrecht zu der Wand 40 so weit in die Öffnung 42 der Wand 40 eingeführt, bis ein Teil einer Windung der Druckfeder 30 an der die Öffnung 42 umgebenden Außenfläche 44 anliegt, Anschließend wird die Durchführung 1 unter Drehen um die Achse 34 weiter in die Öffnung 42 entlang der Windung der Druckfeder 30 eingeschraubt bis sich der Fuß der Druckfeder 30, durch die Öffnung 42 hindurchgetreten, an der Innenfläche 46 der Wand 40 abstützt. Die Stirnfiläche 16 liegt dann mit ihrer in der Ringnut 38 angeordneten Dichtung 48 an der Außenfläche 44 der Wand 40 an. Die durchgehende Bohrung 20 ist mittels des Dichtrings 23 abgedichtet.

Der zweite Abschnitt 12 der in Fig. 4 gezeigten Durchführung 1 weist eine Länge auf, die etwa das zehnfache der Dicke der Wand 40 beträgt. Die Länge des zweiten Abschnitts 12 mindestens das Doppelte der Dicke der Wand 40.

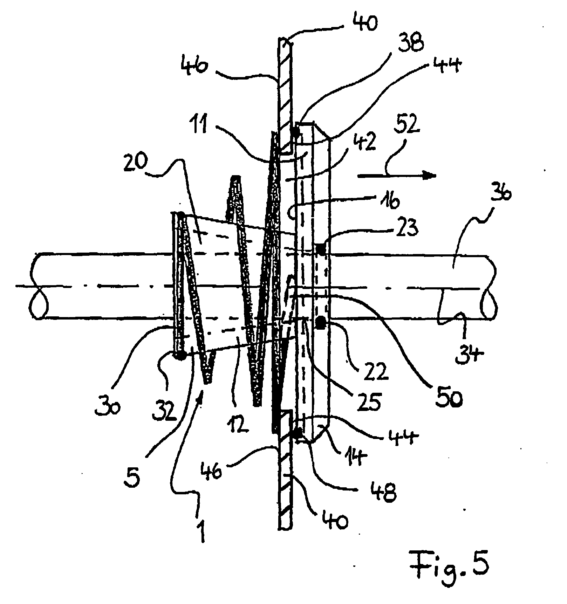

Fig. 5 zeigt ein weiteres Ausführungsbeispiel einer erfindungsgemäßen Durchführung 1, die in der Öffnung 42 der Wand 40 angeordnet ist. Das freie Ende 50 des Fußes der Druckfeder 30 ist derart radial nach innen gebogen, dass es im eingebauten Zustand nicht an der Innenfläche 46 der Wand 40 anliegt, sondern in die Öffnung 20 hineinragt und gegebenenfalls, wie in dem hier dargestellten Ausführungsbeispiel, an der Stirnfläche 16 anliegt. Hierdurch wird ermöglicht, dass die Druckfeder 30 bei gleichzeitigem Herausziehen der Durchführung 1 in Richtung 52 entgegen der Federdruckkraft unter Drehen der Durchführung 1 mit ihrer äußersten Windung so von dem Öffnungsrand ergriffen wird, dass sie an die Außenfläche 44 der Wand 40 zu liegen kommt und so die Durchführung 1 aus der Öffnung 42 heraus geschraubt werden kann.

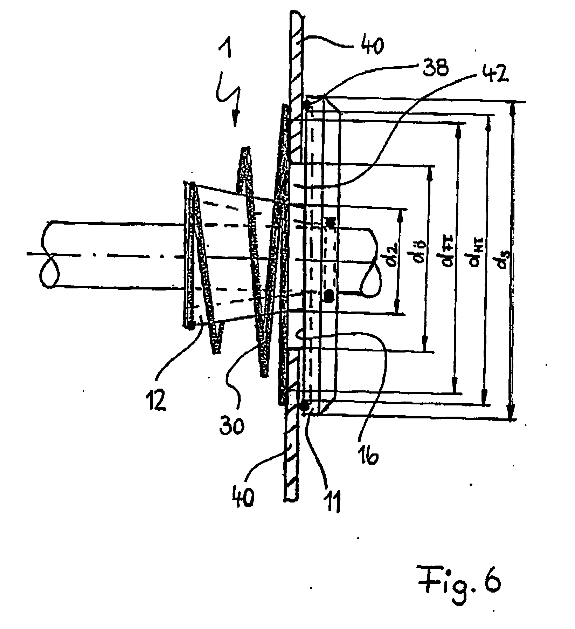

Anhand von Fig. 6 ist noch einmal das anhand von Fig. 1 bis 4 dargestellte Ausführungsbeispiel einer erfindungsgemäßen Durchführung gezeigt, wobei nun die Öffnung 42 einen kleineren Durchmesser aufweist als in Fig. 4. Der Durchmesser der Öffnung 42 ist mit d_{Ö} bezeichnet. Die Bezeichnung d₂ wird für den maximalen Durchmesser gewählt; den der zweite Abschnitt 12 im Bereich der Öffnung 42 aufweist. Verschiebt sich nun aus irgendwelchen Gründen die Durchführung 1 mit ihrer Achse 34 aus der Mitte der Öffnung 42, dann ist die Dichtigkeit der Öffnung 42 nur gewährleistet, wenn der Durchmesser dₛ der Stimfläche 16 bzw. der Innendurchmesser d_{NI} der Ringnut 38 (falls diese vorhanden ist) bzw. der Innendurchmesser etwa einer halben Windung des Fußes der Druckfeder 30 d_{FI} mindestens größer ist als der zweifache Durchmesser der Öffnung d_{Ö} vermindert um den maximalen Durchmesser d₂ des zweiten Abschnitts 12 in der Öffnung 42.

Der Körper 5 kann insbesondere dort, wo es auf Reinlichkeit ankommt, wie z.B. im klinischen Bereich, mindestens teilweise aus PVC, PVDF oder Edelstahl bestehen und die Druckfeder 30 aus einem Metall.

### Bezugszeichenliste

- 1: Durchführung
- 5: Körper
- 11: erster Abschnitt
- 12: zweiter Abschnitt
- 14: Außenkonus
- 16: Stirnfläche
- 20: Bohrung
- 22: Ringnut
- 23: Dichtring
- 25: Kante
- 30: Federelement, Druckfeder
- 32: Ringnut
- 34: Längsachse
- 36: Rohrabschnitt, Strangmaterial
- 38: Ringnut
- 40: Wand
- 42: Öffnung
- 44: Außenfläche der Wand / äußerer Wandbereich
- 46: Innenfläche der Wand, Decke oder dergl.
- 48: Dichtring
- 50: freies Ende des Fußes der Druckfeder
- 52: Zugrichtung

## Patentansprüche

1. Durchführung (1) durch eine Wand, Decke oder dergl. (40), mit einem in eine Öffnung (42) einer Wand, Decke oder dergl. (40) einzusetzenden Körper (5), bestehend mindestens aus einem ersten Abschnitt (11) mit einer an den die Öffnung (42) umgebenden Bereich der Wand, Decke oder dergl. (40) anzulegenden Stirnfläche (16) und einem durch die Öffnung (42) hindurchzuführenden zweiten Abschnitt (12), wobei der Körper (5) einer mit durchgehenden Bohrung (20) zur Aufnahme einer Rohrleitung, eines Kabels oder dergl. Strangmaterial (36) versehen ist, sowie mit einem Federelement (30) zur Positionierung des Körpers (5) an der Wand, Decke oder dergl. (40) **dadurch gekennzeichnet, dass** das Federelement (30) als kegelige, schraubenlinienförmige Druckfeder (30) ausgebildet ist, deren Kopf an dem dem ersten Abschnitt (11) abgewandten Ende des zweiten Abschnitts (12) wenigstens mit hohem Reibschluss abgestützt oder auf andere Weise festgelegt ist und dort einen Außendurchmesser aufweist, der kleiner als der Durchmesser der Öffnung (42) ist, und deren Fuß sich bei Beginn der Montage an der Stirnfläche (16) des ersten Abschnitts (11) abstützt, wobei der Innendurchmesser der Druckfeder (30) im Bereich des Fußes größer als der Durchmesser der Öffnung (42) ist.

2. Durchführung nach Anspruch 1, **dadurch gekennzeichnet, dass** die Bohrung (20) mindestens teilweise als Innenkonus ausgebildet ist.

3. Durchführung nach einem der vorhergehenden Ansprüche, **dadurch gekennzeichnet, dass** die Stimfläche (16) im Wesentlichen eben ausgebildet ist.

4. Durchführung nach einem der vorhergehenden Ansprüche, **dadurch gekennzeichnet, dass** der erste und/oder der zweite Abschnitt (11, 12) im Wesentlichen zylindrisch ausgebildet sindlist.

5. Durchführung nach einem der vorhergehenden Ansprüche, **dadurch gekennzeichnet, dass** der Kopf der Druckfeder (30) an dem dem ersten Abschnitt (11) abgewandten Ende des zweiten Abschnitts (12) festgelegt ist.

6. Durchführung nach einem der vorhergehenden Ansprüche, **dadurch gekennzeichnet, dass** die erste Windung des Kopfs der Druckfeder (30) in einer Ringnut (32) angeordnet ist, die in dem dem ersten Abschnitt (11) abgewandten Ende des zweiten Abschnitts (12) vorgesehen ist.

7. Durchführung nach einem der vorhergehenden Ansprüche, **dadurch gekennzeichnet, dass** in der Bohrung (20), die im Bereich des ersten Abschnittes (11) liegt, eine Ringnut (22) vorgesehen ist, in welcher ein Dichtring (23) anordenbar ist.

8. Durchführung nach einem der vorhergehenden Ansprüche, **dadurch gekennzeichnet, dass** der z.B. rohrartig ausgebildete zweite Abschnitt (12) einen sich zur Stimfläche (16) des ersten Abschnitts (11) hin verjüngenden, äußeren konischen Bereich aufweist.

9. Durchführung nach einem der vorhergehenden Ansprüche, **dadurch gekennzeichnet, dass** das freie Ende des Fußes der Druckfeder (30) radial nach innen gebogen ist.

10. Durchführung nach einem der vorhergehenden Ansprüche, **dadurch gekennzeichnet, dass** der z.B. flanschartig ausgebildete erste Abschnitt (11) an dem dem zweiten Abschnitt (12) abgewandten Ende einen sich von der Stirnfläche (16) des ersten Abschnitts (11) weg verjüngenden konischen Bereich aufweist.

11. Durchführung nach einem der vorhergehenden Ansprüche, **dadurch gekennzeichnet, dass** der Körper (5) mindestens teilweise aus PVC, PVDF oder Edelstahl besteht.

12. Durchführung nach einem der vorhergehenden Ansprüche, **dadurch gekennzeichnet, dass** die Länge des zweiten Abschnitts (12) mindestens das Doppelte der Dicke der Wand, Decke oder dergl. beträgt.

13. Durchführung nach einem der vorhergehenden Ansprüche, **dadurch gekennzeichnet, dass** in der Stimfläche (16) des ersten Abschnitts (11) eine Ringnut (38) vorgesehen ist, in der ein Dichtring (48) anordenbar ist, wobei der Innendurchmesser der Ringnut (38) größer als der Durchmesser der Öffnung (42) ist

14. Durchführung nach Anspruch 13, **dadurch gekennzeichnet, dass** die Stirnfläche (16) des ersten Abschnitts (11) derart ausgebildet ist, dass sie in jeder Stellung die Ränder der Öffnung (42) abdeckt.

15. Durchführung nach Anspruch 13, **dadurch gekennzeichnet, dass** der Durchmesser dₛ der Stirnfläche, der Innendurchmesser d_{FI} der Druckfeder im Bereich des Fußes mindestens über den Bereich etwa einer halben Windung und der Innendurchmesser d_{NI} der Ringnut (38) in der Stimfläche (16) mindestens einen Betrag aufweist, der sich aus dem zweifachen Durchmesser d_{ö} der Öffnung (42) vermindert um den maximalen Durchmesser d₂ des zweiten Abschnitts (12) an dem Ende, das an den ersten Abschnitt (11) angrenzt, über einen Bereich von der Länge der Stärke dₛ, d_{FI}, d_{NI} ≥ 2 x d_{ö} - d₂ der Wand, Decke oder dergl. (40) ergibt.

16. Verfahren zum Befestigen einer Durchführung (1) nach einem der vorhergehenden Ansprüche in einer Öffnung einer Wand, Decke oder dergl. (40) **dadurch gekennzeichnet, dass** zunächst das dem ersten Abschnitt (11) abgewandte Ende des zweiten Abschnitts (12) des Körpers (5) mit dem Kopf der Druckfeder (30) in die Öffnung (42) der Wand, Decke oder dergl. (40) eingeführt wird, bis ein Teil einer Windung der Druckfeder (30) an dem die Öffnung (42) umgebenden äußeren Bereich der Decke, Wand oder dergl. (40) anliegt, und anschließend die Durchführung (1) unter Drehen um ihre Längsachse (34) weiter in die Öffnung (42) entlang der Windung der Druckfeder (30) eingeschraubt wird, bis der Fuß der Druckfeder (30) durch die Öffnung (42) hindurchgetreten ist und sich an einer Innenfläche (46) der Wand, Decke oder dergl, (40) abstützt sowie die Stirnfläche (16) des ersten Abschnitts (11) des Körpers (5) an der Außenfläche (44) der Wand, Decke oder dergl. (40) federvorgespannt anliegt.

17. Verfahren zum Lösen einer Durchführung nach einem der Ansprüche 1 bis 15, **dadurch gekennzeichnet, dass** der Körper (5) mittels der Druckfeder (30) aus der Öffnung (42) der Wand, Decke oder dergl. (40) herausgeschraubt wird, wobei der Körper (5) während des Schraubens aus der Öffnung (42) der Wand, Decke oder dergl. (40) axial herausgezogen wird.

## Claims

1. A leadthrough (1) through a wall, ceiling or the like (40) comprising a body (5), which is to be inserted into an opening (42) of a wall, ceiling or the like (40), consisting at least of a first section (11) comprising a front surface (16), which is to be attached to the area of the wall, ceiling or the like (40), which surrounds the opening (42) and a second section (12), which is to be fed through the opening (42), wherein the body (5) is provided with a continuous bore (20) for accommodating a pipeline, a cable or suchlike strand material (36) as well as comprising a spring element (30) for positioning the body (5) on the wall, ceiling or the like (40), **characterized in that** the spring element (30) is embodied as a conical, helical compression spring (30), the head of which is supported at least with a high frictional connection on the end of the second section (12) facing away from the first section (11) or is fixed in a different manner and at that location encompasses an outer diameter, which is smaller than the diameter of the opening (42) and the foot of which supports itself on the front surface (16) of the first section (11) at the onset of the assembly, wherein the inner diameter of the compression spring (30) in the area of the foot is greater than the diameter of the opening (42).

2. The leadthrough according to claim 1, **characterized in that** the bore (20) is at least partially embodied as an inner cone.

3. The leadthrough according to one of the preceding claims, **characterized in that** the front surface (16) is substantially embodied so as to be planar.

4. The leadthrough according to one of the preceding claims, **characterized in that** the first and/or the second section (11, 12) is/are embodied so as to be substantially cylindrical.

5. The leadthrough according to one of the preceding claims, **characterized in that** the head of the compression spring (30) is fixed to the end of the second section (12) facing away from the first section (11).

6. The leadthrough according to one of the preceding claims, **characterized in that** the first winding of the head of the compression spring (30) is arranged in an annular groove (32), which is provided in the end of the second section (12) facing away from the first section (11).

7. The leadthrough according to one of the preceding claims, **characterized in that** provision is made in the bore (20), which is located in the area of the first section (11), for an annular groove (22), in which a sealing ring (23) can be arranged.

8. The leadthrough according to one of the preceding claims, **characterized in that** the second section (12), which is embodied, e.g., in a tubular manner, encompasses an outer conical area, which tapers towards the front surface (16) of the first section (11).

9. The leadthrough according to one of the preceding claims, **characterized in that** the free end of the foot of the compression spring (30) is bent radially inward.

10. The leadthrough according to one of the preceding claims, **characterized in that** at the end facing away from the second section (12) the first section (11), which is embodied e.g. in a flange-shaped manner, encompasses a conical area, which tapers away from the front surface (16) of the first section (11).

11. The leadthrough according to one of the preceding claims, **characterized in that** the body (5) at least partially consists of PVC, PVDF or stainless steel.

12. The leadthrough according to one of the preceding claims, **characterized in that** the length of the second section (12) amounts to at least twice the thickness of the wall, ceiling or the like.

13. The leadthrough according to one of the preceding claims, **characterized in that** provision is made in the front surface (16) of the first section (11) for an annular groove (38), in which a sealing ring (48) can be arranged, wherein the inner diameter of the annular groove (38) is greater than the diameter of the opening (42).

14. The leadthrough according to claim 13, **characterized in that** the front surface (16) of the first section (11) is embodied in such a manner that it covers the edges of the opening (42) in each position.

15. The leadthrough according to claim 13, **characterized in that** the diameter dₛ of the front surface, the inner diameter d_{FI} of the compression spring in the area of the foot at least across the area of approximately half of a winding and the inner diameter d_{NI} of the annular groove (38) in the front surface (16) encompasses at least an amount, which results from twice the diameter d_{ö} of the opening (42), reduced by the maximum diameter d₂ of the second section (12) at the end, which borders on the first section (11), across an area of the length of the thickness dₛ, d_{FI}, d_{NI} ≥ 2 x d_{ö}-d₂ of the wall, ceiling or the like (40).

16. A method for fastening a leadthrough (1) according to one of the preceding claims in an opening of a wall, ceiling or the like (40), **characterized in that** the end of the second section (12) of the body (5) facing away from the first section (11) is initially inserted into the opening (42) of the wall, ceiling or the like (40) with the head of the compression spring (30) until a part of a winding of the compression spring (30) abuts on the outer area of the ceiling, wall or the like (40) surrounding the opening (42) and the leadthrough (1) is subsequently screwed further into the opening (42) along the winding of the compression spring (30) by rotation about its longitudinal axis (34) until the foot of the compression spring (30) has passed through the opening (42) and supports itself on an inner surface (46) of the wall, ceiling or the like (40) as well as until the front surface (16) of the first section (11) of the body (5) abuts on the outer surface (44) of the wall, ceiling or the like (40) under spring prestress.

17. A method for releasing a leadthrough according to one of claims 1 to 15, **characterized in that** the body (5) is unscrewed from the opening (42) of the wall, ceiling or the like (40) by means of the compression spring (30), wherein the body (5) is pulled out of the opening (42) of the wall, ceiling or the like (40) in axial direction during the screwing process.

## Revendications

1. Conduit (1) à travers un mur, un plafond ou autre (40), avec un corps (5) à insérer dans une ouverture (42) dans un mur, un plafond ou autre (40), constitué d'au moins un premier tronçon (11), avec une surface frontale (16) à appliquer sur la région du mur, du plafond ou autre (40) entourant l'ouverture (42), et d'un deuxième tronçon (12) à faire passer à travers l'ouverture (42), le corps (5) étant pourvu d'un perçage (20) pour l'admission d'un tuyau, d'un câble ou autre matériau allongé (36), ainsi que d'un élément élastique (30) pour le positionnement du corps (5) sur le mur, le plafond ou autre (40), **caractérisé en ce que** l'élément élastique (30) est conçu comme un ressort à pression (30) de forme conique hélicoïdale linéaire, dont la tête est appuyé au moins par engagement par friction élevée ou encore fixé d'une autre manière sur l'extrémité du deuxième tronçon (12) qui est détournée du premier tronçon (11), et comporte à cet endroit un diamètre extérieur inférieur au diamètre de l'ouverture (42), et dont le pied s'appuie sur la surface frontale (16) du premier tronçon (11) au début du montage, le diamètre intérieur du ressort à pression (30) étant, dans la région du pied, supérieur au diamètre de l'ouverture (42).

2. Conduit selon la revendication 1, **caractérisé en ce que** le perçage (20) est au moins partiellement conçu comme un cône interne.

3. Conduit selon l'une des revendications précédentes, **caractérisé en ce que** la surface frontale (16) est conçue de façon essentiellement plane.

4. Conduit selon l'une des revendications précédentes, **caractérisé en ce que** le premier et/ou le deuxième tronçon (11, 12) est/sont conçu(s) de façon essentiellement cylindrique.

5. Conduit selon l'une des revendications précédentes, **caractérisé en ce que** la tête du ressort à pression (30) est fixée à l'extrémité du deuxième tronçon (12) qui est détournée du premier tronçon (11).

6. Conduit selon l'une des revendications précédentes, **caractérisé en ce que** la première spire de la tête du ressort à pression (30) est disposé dans une rainure annulaire (32) prévue à l'extrémité du deuxième tronçon (12) qui est détournée du premier tronçon (11).

7. Conduit selon l'une des revendications précédentes, **caractérisé en ce que** dans le perçage (20) situé dans la région du premier tronçon (11), il est prévu une rainure annulaire (22) dans laquelle peut être disposée une bague d'étanchéité (23).

8. Conduit selon l'une des revendications précédentes, **caractérisé en ce que** le deuxième tronçon (12), par exemple conçu comme un tube, comporte une région conique extérieure, qui se rétrécit vers la surface frontale (16) du premier tronçon (11).

9. Conduit selon l'une des revendications précédentes, **caractérisé en ce que** l'extrémité libre du pied du ressort à pression (30) est courbée radialement vers l'intérieur.

10. Conduit selon l'une des revendications précédentes, **caractérisé en ce que** le premier tronçon (11), par exemple conçu comme une bride, comporte, à l'extrémité détournée du deuxième tronçon (12), une région conique qui se rétrécit à partir de la surface frontale (16) du premier tronçon (11).

11. Conduit selon l'une des revendications précédentes, **caractérisé en ce que** le corps (5) est au moins partiellement constitué de PVC, de PVDF ou d'acier fin.

12. Conduit selon l'une des revendications précédentes, **caractérisé en ce que** la longueur du deuxième tronçon (12) mesure au moins le double de l'épaisseur du mur, du plafond ou autre.

13. Conduit selon l'une des revendications précédentes, **caractérisé en ce que** dans la surface frontale (16) du premier tronçon (11), il est prévu une rainure annulaire (38), dans laquelle peut être disposée une bague d'étanchéité (48), le diamètre intérieur de la rainure annulaire (38) étant supérieur au diamètre de l'ouverture (42).

14. Conduit selon la revendication 13, **caractérisé en ce que** la surface frontale (16) du premier tronçon (11) est conçue de telle manière, qu'elle recouvre les bords de l'ouverture (42) dans chaque position.

15. Conduit selon la revendication 13, **caractérisé en ce que** le diamètre dₛ de la surface frontale, le diamètre intérieur d_{FI} du ressort à pression dans la région du pied, au moins sur environ la moitié d'une spire, et le diamètre intérieur d_{NI} de la rainure annulaire (38) dans la surface frontale (16) présentent au moins une dimension obtenue par le double du diamètre d_{ö} de l'ouverture (42), moins le diamètre maximal d₂ du deuxième tronçon (12) à l'extrémité adjacente au premier tronçon (11), sur une étendue de la longueur de l'épaisseur dₛ, d_{FI}, d_{NI} ≥ 2 x d_{ö} - d₂ du mur, du plafond ou autre (40).

16. Procédé pour la fixation d'un conduit (1) selon l'une des revendications précédentes, dans une ouverture d'un mur, d'un plafond ou autre (40), **caractérisé en ce que** pour commencer, l'extrémité du deuxième tronçon (12) du corps (5) qui est détournée du premier tronçon (11) est introduite avec la tête du ressort à pression (30) dans l'ouverture (42) du mur, du plafond ou autre (40), jusqu'à ce qu'une partie d'une spire du ressort à pression (30) s'applique sur la région extérieure du mur, du plafond ou autre (40) qui entoure l'ouverture (42), puis le conduit (1) est vissé plus loin dans l'ouverture (42) le long de la spire du ressort à pression (30), par rotation autour de son axe longitudinal (34), jusqu'à ce que le pied du ressort à pression (30) ait traversé l'ouverture (42) et s'appuie sur une surface intérieure (46) du mur, du plafond ou autre (40), et que la surface frontale (16) du premier tronçon (11) du corps (5), précontrainte par ressort, s'applique sur la surface extérieure (44) du mur, du plafond ou autre (40).

17. Procédé pour le retrait d'un conduit selon l'une des revendications 1 à 15, **caractérisé en ce que** le corps (5) est retiré par vissage de l'ouverture (42) dans le mur, le plafond ou autre (40), au moyen du ressort à pression (30), le corps (5) étant retiré axialement pendant le dévissage hors de l'ouverture (42) dans le mur, le plafond ou autre (40).
